# EUROPÄISCHE PATENTSCHRIFT

(11) **EP 1 070 898 B1**
(45) Veröffentlichungstag und Bekanntmachung des Hinweises auf die Patenterteilung: **11.06.2003**
(21) Anmeldenummer: 00114030.0
(22) Anmeldetag: 05.07.2000
(51) Int. Cl.: F16L 27/08, F16L 37/084

(54) **Steckkupplung für Druckmittelsysteme**
Plug connector for pressure fluid system
Raccord enfichable pour système à fluide sous pression

(30) Priorität: 23.07.1999 DE 29912878 U
(43) Veröffentlichungstag der Anmeldung: 24.01.2001
(73) Patentinhaber: VOSS Fluid GmbH & Co. KG, 51688 Wipperfürth (DE)
(72) Erfinder: Schröer, Bettina, 51688 Wipperfürth (DE); Hilmar, Hester, 51688 Wipperfürth (DE)
(74) Vertreter: Patentanwälte Dr. Solf & Zapf

(56) Entgegenhaltungen:
- EP-A- 0 018 828
- DE-B- 1 083 608
- DE-U- 29 901 674
- US-A- 3 799 589
- US-A- 4 205 866
- US-A- 5 005 877

## Beschreibung

Die vorliegende Erfindung betrifft eine Steckkupplung für Druckmittelleitungen, bestehend aus zwei Kupplungsteilen, und zwar einem Gehäuseteil und einem in Richtung einer Kupplungsachse in eine Aufnahmeöffnung des Gehäuseteils einsteckbaren Steckerteil, wobei das eingesteckte Steckerteil innerhalb der Aufnahmeöffnung über ein radial elastisch bewegliches Halteelement selbsttätig gegen Lösen arretierbar ist, indem das auf der Seite des einen Kupplungsteils gelagerte Halteelement eine radiale Raststufe des anderen Kupplungsteils formschlüssig rastend hintergreift.

Derartige Steckkupplungen sind beispielsweise durch die DE 197 22 039 A1 bzw. die parallele EP 0 881 421 A2 sowie auch durch die US-A-5 005 877 jeweils bekannt.

Die Steckkupplung gemäß DE 197 22 039 A1 hat sich in der Praxis bereits gut bewährt, weil durch eine besondere Ausgestaltung des Halteelementes sehr hohe Haltekräfte erreicht werden, so daß sich die Kupplung für einen hohen Betriebsdruck eignet. Durch den inneren Betriebsdruck wird die Kupplung mit einer in Löserichtung des Steckerteils wirkenden Kraft beaufschlagt, die von dem Halteelement aufgenommen werden muß, ohne daß es zum Lösen der Kupplungsverbindung kommt. Bei der bekannten Steckkupplung ist dazu das Halteelement ringförmig ausgebildet, und es besteht derart aus mehreren einzelnen Ringsegmenten sowie einem konzentrischen, die Ringsegmente mit radial wirkender Federkraft beaufschlagenden Federringelement, daß beim Steckvorgang jedes Ringsegment radial gegen bzw. durch die Federkraft des Federringelementes beweglich ist. Jedes Ringsegment ist dabei selbst unelastisch und formstabil sowie vorzugsweise mit einem im wesentlichen rechteckigen Ringquerschnitt ausgebildet. Hierdurch liegen die Ringsegmente jeweils relativ großflächig axial zwischen radialen Flächen der Kupplungsteile an. Dadurch wird eine formschlüssige Arretierung erreicht, mit der besonders hohe Kräfte sicher aufgenommen werden können. In der Praxis hat sich jedoch weiterhin gezeigt, daß bei bestimmten Anwendungen, bei denen unter Verwendung von Schlauchleitungen Bewegungen der Kupplungsverbindung auftreten (beispielsweise im Bereich von beweglichen Roboterarmen), nach einer relativ kurzen Betriebszeit aufgrund von ständigen Bewegungen Undichtigkeiten und/oder Beschädigungen, Verschleißerscheinungen und/ oder Beschädigungen im Bereich der Schlauchleitungen auftreten können.

In der EP-A-0 018 828 ist eine Vorrichtung zum verdrehbaren Verbinden von Rohrleitungen beschrieben, wobei aber ein zweigeteilter Haltering zusammen mit einem inneren Teil montiert und über Schraubverbindungen fixiert werden muß. Demnach handelt es sich nicht um eine Steckverbindung im gattungsgemäßen Sinne, weil der Haltering nicht radialelastisch ist und daher kein einfaches Einstecken zum selbsttätigen Arretieren eines Steckers durch formschlüssiges Rasten erlaubt. Bei dieser bekannten Vorrichtung ist zudem aber ein Drehlager vorgesehen, um eine Relativ-Verdrehung zwischen den Teilen zu ermöglichen.

Ähnliches gilt auch für das Dokument US-A-3 799 589. Auch dabei muß ein eingestecktes Teil in einem Aufnahmeteil manuell mit einem Federring arretiert werden. Ein einfaches Einstecken mit selbsttätiger Arretierung gegen Lösen im gattungsgemäßen Sinne ist nicht möglich. Zwischen den verbundenen Teilen ist zur relativen Verdrehbarkeit ein Kugellager angeordnet.

Der vorliegenden Erfindung liegt die Aufgabe zugrunde, die beschriebenen Probleme zu beseitigen und dazu eine gattungsgemäße Steckkupplung so zu verbessem, daß sie sich auch besonders gut für den Einsatz an oder in beweglichen Komponenten in Verbindung mit Schlauchleitungen eignet.

Erfindungsgemäß wird dies durch die Merkmale des Patentanspruchs 1 erreicht.

Damit beruht die Erfindung auf der Erkenntnis, daß bei der bekannten gattungsgemäßen Steckkupplung zwar die Kupplungsteile im unbelasteten, drucklosen Zustand nahezu frei relativ zueinander verdrehbar sind, daß aber diese Verdrehbarkeit im druckbelasteten Zustand nicht mehr gewährleistet ist. Durch den inneren Betriebsdruck werden die Kupplungsteile mit einer in Löserichtung des Steckerteils wirkenden Kraft beaufschlagt, die über das Halteelement aufgenommen wird. Bei hohem Druck resultiert daraus ein derart hoher Reibschluß (Kraftschluß) zwischen dem Halteelement und den beiden Kupplungsteilen, daß dann eine Relatiwerdrehung nicht mehr möglich ist. Dadurch wirken sich alle Bewegungen der Kupplungsverbindung voll auf die angeschlossene Schlauchleitung aus, die deshalb insbesondere auf Torsion und/oder Biegung beansprucht wird, was eine sehr ungünstige Belastung darstellt und in der Folge relativ schnell zu Undichtigkeiten führt.

Durch das erfindungsgemäße Drehlager und seine besondere Druckring-Anordnung wird demgegenüber vorteilhafterweise in allen Betriebszuständen, also besonders auch unter Betriebsdruck und daraus resultierender, in Löserichtung wirkender Kraft, eine relativ langsame, zumeist oszillierende Verdrehbarkeit der beiden Steck-Kupplungsteile relativ zueinander gewährleistet, so daß sich das eine, jeweils mit einer Schlauchleitung verbundene Kupplungsteil stets selbsttätig so ausrichten kann, daß ungünstige Bewegungen, vor allem Torsionen, der Schlauchleitung weitgehend vermieden werden. Dies wirkt sich in einer deutlich längeren Haltbarkeit und Dichtigkeit der Leitungen aus. Zudem ist die Steckkupplung leicht montierbar und demontierbar.

Weitere vorteilhafte Ausgestaltungmerkmale der Erfindung sind in den Unteransprüchen sowie der folgenden Beschreibung enthalten.

Anhand von mehreren in der Zeichnung dargestellten, bevorzugten Ausführungsbeispielen soll die Erfindung genauer erläutert werden. Dabei zeigen:
- Fig. 1: eine erste Ausführungsform einer erfindungsgemäßen Steckkupplung in einem Längsschnitt in der Ebene I-I gemäß Fig. 2 in der eingesteckten und verriegelten Lage der Kupplungsteile,
- Fig. 2: einen Querschnitt im Bereich des Halteelementes, d. h. in der Ebene II-II gemäß Fig. 1,
- Fig. 3: den Bereich III gemäß Fig. 1 in starker Vergrößerung,
- Fig. 4 bis 6: weitere Ausführungsformen der erfindungsgemäßen Steckkupplung jeweils im Halb-Längsschnitt mit einem zusätzlichen Radial-Lager zur Querkraft-Abstützung.

In den verschiedenen Figuren der Zeichnung sind gleiche Teile stets mit den gleichen Bezugszeichen versehen.

Eine erfindungsgemäße Steckkupplung besteht aus zwei Kupplungsteilen, und zwar einem Gehäuseteil 2 und einem Steckerteil 4. Das Steckerteil 4 ist mit einem im wesentlichen zylindrischen Steckerschaft 6 umfangsgemäß abgedichtet in eine Aufnahmeöffnung 8 des Gehäuseteils 2 einsteckbar und im eingesteckten Zustand über eine Verriegelungseinrichtung 10 gegen Lösen arretierbar. Hierzu weist die Verriegelungseinrichtung 10 ein in radialer Richtung elastisch bewegliches Halteelement 12 auf, welches auf der Seite des einen Kupplungsteil - in den dargestellten Ausführungsbeispielen des Gehäuseteils 2 - gelagert ist und zum Arretieren des Steckerteils 4 im eingesteckten Zustand eine radiale Raststufe 14 des anderen Kupplungsteils - wie dargestellt bevorzugt des Steckerteils 4 bzw. des Stekerschaftes 6 - formschlüssig rastend hintergreift. Dieser Verriegelungszustand ist in den Zeichnungsfiguren jeweils dargestellt.

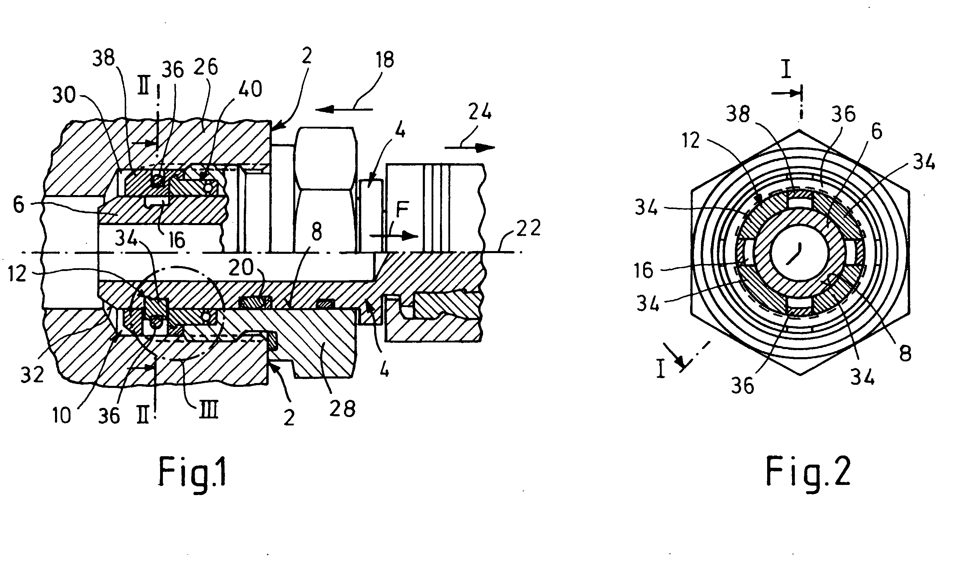

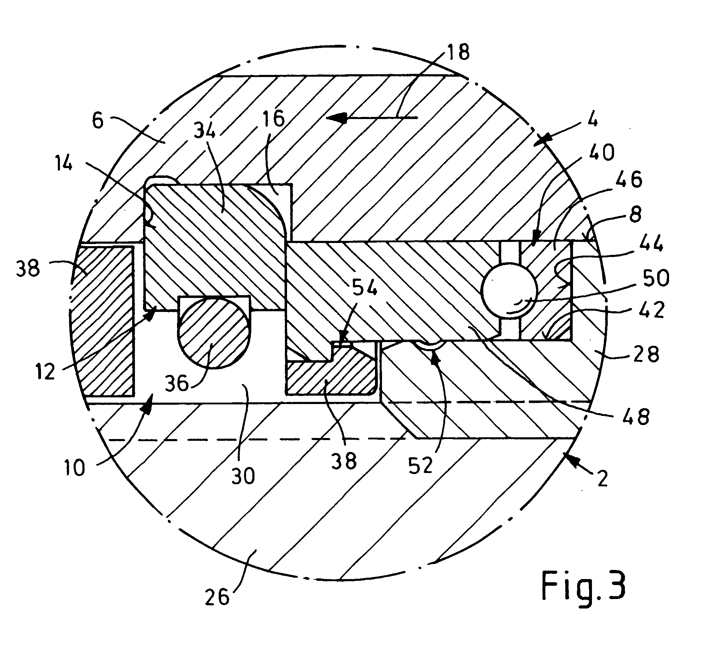

In der Ausführung nach Fig. 1 bis 3 ist die Raststufe 14 (siehe insbesondere Fig. 3) durch eine Außenringnut 16 am Steckerschaft 6 gebildet. Diese Außenringnut 16 weist einen zylindrischen Nutgrund auf, der auf der in Einsteckrichtung (Pfeil 18) weisenden Seite in eine die Raststufe 14 bildende Flankenfläche übergeht. Um eine rein formschlüssige Arretierung zu gewährleisten, schließt die Raststufe 14 mit dem Nutgrund einen Winkel von maximal 90 Grad ein. Zur umfangsgemäßen Abdichtung sitzt eine Umfangsdichtung 20 in einer weiteren Ringnut des Steckerschaftes 6.

Das Steckerteil 4 ist mit seinem Steckerschaft 6 in Richtung einer Kupplungsachse 22 in Pfeilrichtung 18 in die Aufnahmeöffnung 8 des Gehäuseteils 2 einsteckbar. Das dann formschlüssig einrastende Halteelement 12 bewirkt ein Arretieren gegen Lösen bzw. Entnehmen des Steckerteils 4 in Pfeilrichtung 24.

Vorzugsweise besteht das Gehäuseteil 2 aus zwei lösbar miteinander verbundenen Teilen, und zwar aus einem Basisteil 26 und einem Einsatzteil 28. Das Einsatzteil 28 kann gemäß Fig. 1 bis 3 als eine im wesentliche hohlzylindrische und dabei einen Teil der Aufnahmeöffnung 8 bildende, bereichsweise in eine Öffnung des Basisteils 26 einsetzbare Überwurfschraube ausgebildet sein. Das Basisteil 26 und das Einsatzteil 28 begrenzen gemeinsam eine Ringkammer 30 zur lagernden Aufnahme des Halteelementes 12. Diese Ausgestaltung ermöglicht einerseits eine einfache Montage der Einzelteile der Steckkupplung. Andererseits wird hierdurch auch ein Lösen des Steckerteils 4 möglich, indem das Einsatzteil 28 vom Basisteil 26 getrennt wird. Das Steckerteil 4 ist dann zusammen mit dem Halteelement 12 aus dem Gehäuseteil 2 entnehmbar.

Zum radialelastischen Spreizen des Halteelementes 12, welches bereichsweise in die Aufnahmeöffnung 8 und damit in den Querschnittsbereich des Steckerschaftes 6 hineinragt, weist das Steckerteil 4 am freien Ende des Steckerschaftes 6 eine Außenkonusfläche 32 auf.

In weiterer vorteilhafter Ausgestaltung ist vorgesehen, daß das Halteelement 12 kreisringförmig ausgebildet ist und dabei derart aus mehreren einzelnen Ringsegmenten 34 (siehe insbesondere Fig. 2) sowie einem konzentrischen, die Ringsegmente 34 mit einer radial wirkenden Federkraft beaufschlagenden Federringelement 36 besteht, daß beim Steckvorgang jedes Ringsegment 34 insgesamt radial gegen die Federkraft des Federringelementes 36 beweglich ist. Hierdurch werden die Ringsegmente 34 beim Einstecken des Steckerschaftes 6 zunächst so gegen die Federkraft verdrängt, d. h. bevorzugt radial nach außen bewegt, daß der Steckerschaft 6 weiter eingesteckt werden kann. Nachfolgend können sich dann die Ringsegmente 34 aufgrund der Federkraft wieder radial zurückbewegen, bis sie die Raststufe 14 rastend formschlüssig hintergreifen. Bevorzugt weisen die einzelnen Ringsegmente 34 jeweils einen im wesentlichen rechteckigen Ringquerschnitt auf (im Radialschnitt gesehen). Dadurch sind die einzelnen Ringsegmente 34 selbst relativ unelastisch und formstabil ausgebildet, so daß sie sich beim Steckvorgang selbst praktisch nicht verformen, sondern nur gänzlich radial bewegen, bezogen jeweils auf ihre radiale, mittige Symmetrielinie. Das elastische Federringelement 36 kann von (mindestens) einem Drahtfederring, Schraubenfederring, gummielastischen Formring oder dergleichen gebildet sein. Zweckmäßigerweise besteht das Halteelement 12 aus mindestens drei, in dem dargestellten Ausführungsbeispiel aus vier radialsymmetrisch ausgebildeten und angeordneten Ringsegmenten 34. Zudem sind hierbei vorzugsweise die Ringsegmente 34 in einem ringförmigen Aufnahmekäfig 38 gelagert.

Im übrigen wird zu der Ausgestaltung der Verriegelungseinrichtung 10 auf die eingangs genannten Druckschriften DE 197 22 039 A1 und EP 0 881 421 A2 in vollem Umfange Bezug genommen.

Erfindungsgemäß ist nun bei der Steckkupplung zwischen dem Halteelement 12 und einem der beiden Kupplungsteile 2, 4 ein Drehlager 40 derart angeordnet, daß das eingesteckte und über das Halteelement 12 arretierte Steckerteil 4 auch bei Beaufschlagung mit einer in Löserichtung (Pfeil 24) wirkenden Kraft F (siehe Fig. 1 sowie Fig. 4 bis 6) über das Drehlager 40 relativ zu dem Gehäuseteil 2 um die Kupplungsachse 22 verdrehbar ist.

Bei den bevorzugten Ausführungsformen, wobei das Halteelement 12 innerhalb des Gehäuseteils 2 gelagert ist, und wobei die radiale Raststufe 14 am Steckerteil 4 gebildet ist, ist erfindungsgemäß das Drehlager 40 axial zwischen dem Halteelement 12 und dem Gehäuseteil 2 angeordnet. Bevorzugt ist das Drehlager 40 innerhalb des Gehäuseteils 2 in einer radialen Erweiterung 42 der Aufnahmeöffnung 8 auf der der Mündungsseite der Aufnahmeöffnung 8 zugekehrten Seite des Halteelementes 12 axial zwischen letzterem und einer radialen Stufenfläche 44 des Gehäuseteils 2 angeordnet. Dies hat zur Folge, daß das Steckerteil 4 beim Steckvorgang mit seinem Steckerschaft 6 durch das Drehlager 40 hindurch einsteckbar ist. Es wird insbesondere auf die vergrößerte Darstellung in Fig. 3 hingewiesen.

Das Drehlager 40 ist erfindungsgemäß als axiales Drucklager, insbesondere Kugellager oder dergleichen Wälzlager, ausgebildet. Dazu besteht das Drehlager 40 aus einem ersten Druckring 46 und einem zweiten Druckring 48 sowie axial zwischen den beiden Druckringen 46, 48 angeordneten Wälzkörpern 50, insbesondere Kugeln.

Der erste, von dem Halteelement 12 entfernt liegende Druckring 46 des Drehlagers 40 ist mit dem Gehäuseteil 2, insbesondere im Bereich der Erweiterung 42 des Einsatzteils 28, verdrehfest verbunden, beispielsweise gemäß Fig. 1 bis 3 eingepreßt. Der zweite, dem Halteelement 12 zugekehrte Druckring 48 des Drehlagers 40 ist derart mit dem Gehäuseteil 2, insbesondere dem Einsatzteil 28, verbunden, daß er relativ zu dem Gehäuseteil 2 einerseits um die Kupplungsachse 22 verdrehbar, andererseits aber in axialer Richtung fixiert ist. Bei dieser Verbindung kann es sich - siehe insbesondere Fig. 3 - mit Vorteil um eine schnappbare Kraftformschlußverbindung 52 handeln, d. h. um eine Rastverbindung, durch die gewährleistet ist, daß der Druckring 48 beim Hindurchstecken des Steckerschaftes 6 seine Position beibehält, also nicht axial verschoben wird. Weiterhin ist gemäß Fig. 1 bis 3 bevorzugt der zweite Druckring 48 des Drehlagers 40 auch mit dem Aufnahmekäfig 38 des Halteelementes 12 verbunden, und zwar insbesondere über eine schnappbare Kraftformschlußverbindung (Rastverbindung) 54. Diese Verbindung ist derart ausgestaltet, daß die Haltekörper bzw. Ringsegmente 34 axial unmittelbar an dem zweiten Druckring 48 zur Anlage gelangen.

Bei Auftreten der in Löserichtung 24 wirkenden Kraft F wird zwischen den Ringsegmenten 34 und dem zweiten Druckring 48 ein hoher Reibschluß bewirkt, so daß bei einer Drehung des Steckerteils 4 über das Halteelement 12 auch der zweite Druckring 48 mitgenommen wird. Diese Verdrehung wird durch die Wälzkörper 50 relativ zu dem ersten Druckring 46 und dem Gehäuseteil 2 ermöglicht.

Durch die Rastverbindungen 52 und 54 ist vorteilhafterweise das Halteelement 12 über das Drehlager 40 an dem Einsatzteil 28 vorfixiert, was die Montage und Demontage der Einzelteile erleichtert.

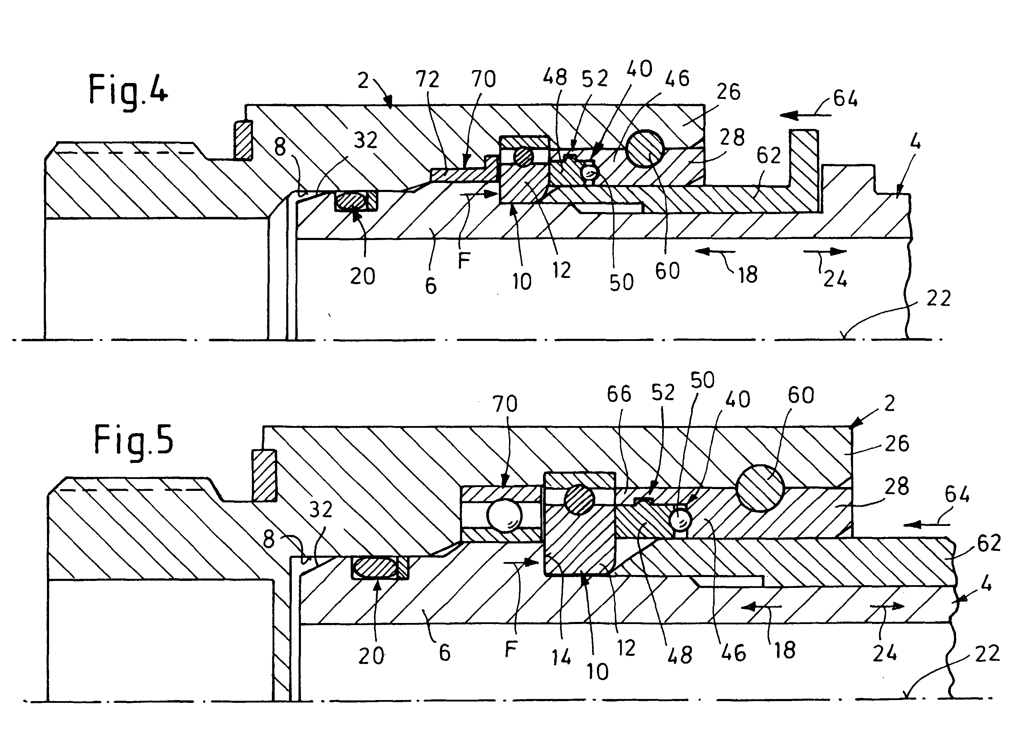

Was nun die Ausführungen nach Fig. 4 bis 6 betrifft, so unterscheiden sich diese von den Fig. 1 bis 3 zunächst dadurch, daß das Einsatzteil 28 als eine Ringhülse ausgebildet ist, die in eine Erweiterung des Basisteils 26 eingesetzt und dort durch ein Sperrelement 60 fixiert ist. Das Sperrelement 60 kann als Drahtring ausgebildet sein, der in einer Ringkammer sitzt, die anteilig von radialen, rillenartigen Ringnuten des Basisteils 26 und des Einsatzteils 28 gebildet ist. Das ringförmige Sperrelement 60 wird dabei montiert, indem es beginnend mit einem vorderen Drahtende durch eine tangentiale Querbohrung (nicht dargestellt) von außen in die Ringkammer eingepreßt wird. Das Einsatzteil 28 ist dann im Grunde unlösbar mit dem Basisteil 26 verbunden.

Um dabei dennoch das Steckerteil 4 lösen zu können, ist vorteilhafterweise eine Lösehülse 62 vorgesehen, die beispielsweise axial verschiebbar auf dem Steckerteil 4 geführt ist. Durch Verschieben in Einsteckrichtung 18 (Pfeil 64) kann das Halteelement 12 mittels der Lösehülse 62 zur Freigabe des Steckerteils 4 gespreizt werden.

Gemäß Fig. 4 bis 6 ist es weiterhin vorteilhaft, wenn das Einsatzteil 28 unmittelbar Bestandteil des erfindungsgemäßen Drehlagers 40 ist, indem es praktisch den ersten Druckring 46 bildet. Zudem weist das Einsatzteil 28 auch bei diesen Ausführungen einen radial äußeren, das Drehlager 40 axial und radial außen übergreifenden Ringsteg 66 auf, der über die schon beschriebene Kraftformschlußverbindung 52 den zweiten Druckring 48 des Drehlagers 40 fixiert.

In weiterer vorteilhafter Ausgestaltung ist bei den Ausführungen nach Fig. 4 bis 6 jeweils ( mindestens ) ein zusätzliches Radiallager 70 zwischen dem Steckerschaft 6 und dem Gehäuseteil 2 vorgesehen, wobei dieses Radiallager 70 zur Aufnahme von Querkräften bzw. Kippkräften des Steckerteils 4 dient. Das Radiallager 70 ist auf der anderen, dem Drehlager 40 gegenüberliegenden Seite des Halteelementes 12 angeordnet.

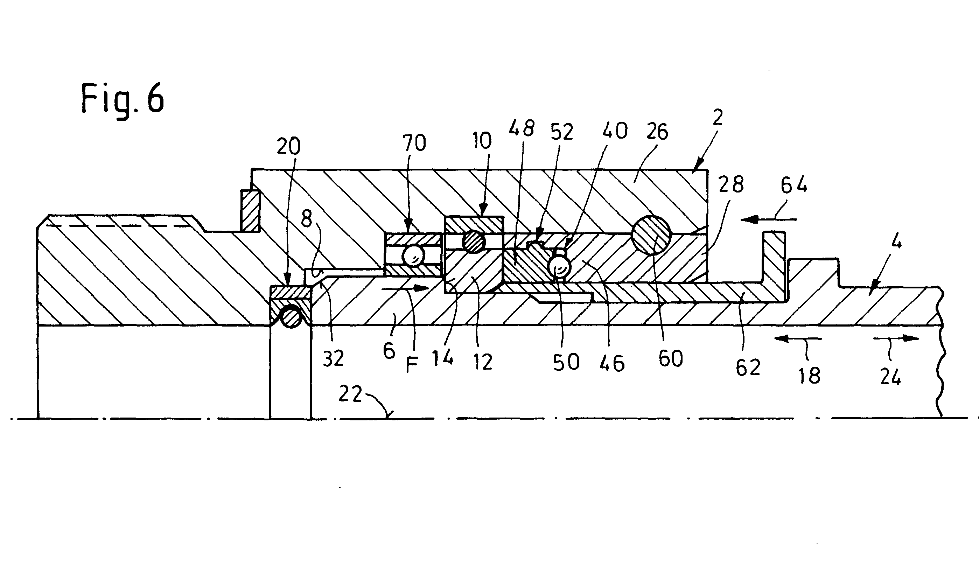

Gemäß Fig. 4 ist das Radiallager 70 als Gleitlager mit einer vorzugsweise aus Kunststoff bestehenden Lagerbuchse 72 ausgeführt. Bei den Ausführungen gemäß Fig. 5 und 6 wird für das Radiallager 70 ein Wälzlager, wie dargestellt ein Kugellager oder aber ein Nadellager, verwendet.

Gemäß Fig. 4 und 5 ist die Umfangsdichtung 20 im eingesteckten Endbereich des Steckerschaftes 6 angeordnet und hier als Radialdichtung ausgebildet. Gemäß Fig. 6 ist die Umfangsdichtung 20 demgegenüber als Axialdichtung zwischen dem freien Stimende des Steckerschaftes 6 und einer Stufenfläche innerhalb des Gehäuseteils 2 angeordnet. Der Vorteil dieser Ausführung ist einerseits eine geringere Dichtungsreibung, was für die erfindungsgemäße Drehbarkeit vorteilhaft ist. Andererseits wird im Bereich des Radiallagers 70 durch den Fortfall der radialen Abdichtung in diesem Bereich eine bessere radiale Abstützung erreicht. Schließlich führt diese Ausführung auch zu einer kürzeren Baulänge als in Fig. 4 und 5.

## Patentansprüche

1. Steckkupplung für Druckmittelleitungen, bestehend aus zwei Kupplungsteilen (2, 4), und zwar aus einem Gehäuseteil (2) und einem in Richtung einer Kupplungsachse (22) in eine Aufnahmeöffnung (8) des Gehäuseteils (2) einsteckbaren Steckerteil (4), wobei das eingesteckte Steckerteil (4) innerhalb der Aufnahmeöffnung (8) über ein radialelastisch bewegliches Halteelement (12) selbsttätig gegen Lösen arretierbar ist, indem das auf der Seite des einen Kupplungsteils (2) gelagerte Halteelement (12) eine radiale Raststufe (14) des anderen Kupplungsteils (4) formschlüssig rastend hintergreift,
**gekennzeichnet durch** ein derart zwischen dem Halteelement (12) und einem der beiden Kupplungsteile (2, 4) angeordnetes Drehlager (40), daß das eingesteckte und über das Halteelement (12) gegen Lösen arretierte Steckerteil (4) auch bei Beaufschlagung mit einer in Löserichtung (24) wirkenden Kraft (F) über das Drehlager (40) relativ zu dem Gehäuseteil (2) um die Kupplungsachse (22) verdrehbar ist, wobei das Drehlager (40) als axiales Wälzlager aus einem ersten Druckring (46) und einem zweiten Druckring (48) sowie axial zwischen den Druckringen (46, 48) angeordneten Wälzkörpem (50) besteht, und wobei der erste, von dem Halteelement (12) entfernt liegende Druckring (46) des Drehlagers (40) verdrehfest oder einstückig mit dem Gehäuseteil (2) verbunden ist, während der zweite, dem Halteelement (12) zugekehrte Druckring (48) des Drehlagers (40) derart mit dem Gehäuseteil (2) verbunden ist, daß er relativ zu dem Gehäuseteil (2) einerseits verdrehbar, andererseits aber in axialer Richtung fixiert ist.

2. Steckkupplung nach Anspruch 1,
**dadurch gekennzeichnet,**
**daß** das Halteelement (12) in einer Erweiterung (30) innerhalb des Gehäuseteils (2) gelagert ist, und daß die radiale Raststufe (14) an dem Steckerteil (4) gebildet ist, wobei das Drehlager (40) axial zwischen dem Halteelement (12) und dem Gehäuseteil (2) angeordnet ist.

3. Steckkupplung nach Anspruch 1 oder 2,
**dadurch gekennzeichnet,**
**daß** das Drehlager (40) als axiales Kugellager mit axial zwischen den Druckringen (46, 48) angeordneten Kugeln ausgebildet ist.

4. Steckkupplung nach einem der Ansprüche 1 bis 3,
**dadurch gekennzeichnet,**
**daß** das Drehlager (40) innerhalb des Gehäuseteils (2) in einer radialen Erweiterung (42) der Aufnahmeöffnung (8) auf der der Mündungsseite der Aufnahmeöffnung (8) zugekehrten Seite des Halteelementes (12) axial zwischen diesem und einer radialen Stufenfläche (44) des Gehäuseteils (2) angeordnet ist.

5. Steckkupplung nach Anspruch 4,
**dadurch gekennzeichnet,**
**daß** das Gehäuseteil (2) zweiteilig aus einem Basisteil (26) und einem Einsatzteil (28) besteht, wobei die das Halteelement (12) aufnehmende Erweiterung (30) und die das Drehlager (40) aufnehmende Erweiterung (42) im Bereich zwischen dem Basisteil (26) und dem eingesetzten Einsatzteil (28) gebildet sind.

6. Steckkupplung nach Anspruch 5,
**dadurch gekennzeichnet, dass** der erste Druckring (46) verdrehfest oder einstückig mit dem Einsatzteil (28) verbunden ist.

7. Steckkupplung nach Anspruch 5 oder 6,
**dadurch gekennzeichnet, dass** der zweite Druckring (48) mit dem Einsatzteil (28) relativ verdrehbar, aber in axialer Richtung fixiert verbunden ist.

8. Steckkuppplung nach einem der Ansprüche 1 bis 7,
**dadurch gekennzeichnet,**
**daß** das Halteelement (12) aus einem ringförmigen Aufnahmekäfig (38) und darin gelagerten Haltekörpem besteht, wobei die Hattekörper vorzugsweise als formstabile Ringsegmente (34) ausgebildet und derart mit radialer Federkraft beaufschlagt sind, daß sich beim Steckvorgang die Haltekörper jeweils radial bewegen.

9. Steckkupplung nach Anspruch 8,
**dadurch gekennzeichnet,**
**daß** der Aufnahmekäfig (38) des Halteelementes (12) mit dem zweiten Druckring (48) des Drehlagers (40) insbesondere über eine schnappbare Kraftformschlußverbindung (54) derart verbunden ist, daß die Haltekörper (34) axial unmittelbar an dem zweiten Druckring (48) zur Anlage gelangen.

10. Steckkupplung nach einem der Ansprüche 1 bis 9,
**gekennzeichnet durch**
mindestens ein zusätzliches Radiallager (70) zur Abstützung des gesteckten Steckerteils (4) gegen Querkräfte bzw. gegen Verkippen.

11. Steckkupplung nach einem der Ansprüche 1 bis 10,
**gekennzeichnet durch**
eine axial verschiebbare Lösehülse (62) zum Spreizen des Halteelementes (12) zwecks Freigabe des Steckerteils (4).

## Claims

1. Plug-in coupling for pressure-medium lines, comprising two coupling parts (2, 4), specifically a housing part (2) and a plug part (4) that can be plugged into a receiving opening (8) in the housing part (2) in the direction of a coupling axis (22), it being possible for the plugged-in plug part (4) to be locked automatically against detachment within the receiving opening (8) via a retaining element (12) that can be moved radially and elastically, by the retaining element (12) mounted on the side of one coupling part (2) engaging in a latching manner with a form fit behind a radial latching step (14) on the other coupling part (4),
**characterized by** a rotary bearing (40) which is arranged between the retaining element (12) and one of the two coupling parts (2, 4) in such a way that the plug part (4) plugged in and locked against detachment via the retaining element (12) can be rotated about the coupling axis (22) relative to the housing part (1) via the rotary bearing (40), even when acted on by a force (F) that acts in the detachment direction (24), the rotary bearing (40), as an axial rolling-contact bearing, comprising a first pressure ring (46) and a second pressure ring (48) and rolling-contact bodies (50) arranged axially between the pressure rings (46, 48), and the first pressure ring (46), located remote from the retaining element (12), of the rotary bearing (40) being connected to the housing part (2) so as to be fixed against rotation or connected in one piece, while the second pressure ring (48), facing the retaining element (12), of the rotary bearing (40) is connected to the housing part (2) in such a way that it can be rotated relative to the housing part (2), on the one hand, but on the other hand is fixed in the axial direction.

2. Plug-in coupling according to Claim 1, **characterized in that** the retaining element (12) is mounted in a widening (30) within the housing part (2), and **in that** the radial latching step (14) is formed on the plug part (4), the rotary bearing (40) being arranged axially between the retaining element (12) and the housing part (2).

3. Plug-in coupling according to Claim 1 or 2, **characterized in that** the rotary bearing (40) is formed as an axial ball bearing having balls arranged axially between the pressure rings (46, 48).

4. Plug-in coupling according to one of Claims 1 to 3, **characterized in that** the rotary bearing (40) is arranged within the housing part (2) in a radial widening (42) of the receiving opening (8) on that side of the retaining element (12) which faces the opening side of the receiving opening (8), axially between the said retaining element (12) and a radial step face (44) on the housing part (2).

5. Plug-in coupling according to Claim 4, **characterized in that** the housing part (2) comprises two parts, a base part (26) and an insert part (28), the widening (30) that accommodates the retaining element (12) and the widening (42) that accommodates the rotary bearing (40) being formed in the region between the base part (26) and the inserted insert part (28).

6. Plug-in coupling according to Claim 5, **characterized in that** the first pressure ring (46) is connected to the insert part (28) so as to be fixed against rotation or connected in one piece.

7. Plug-in coupling according to Claim 5 or 6, **characterized in that** the second pressure ring (48) is connected to the insert part (28) such that it can be rotated relative thereto but is fixed in the axial direction.

8. Plug-in coupling according to one of Claims 1 to 7, **characterized in that** the retaining element (12) comprises a ring-like holding cage (38) and retaining elements mounted therein, the retaining elements preferably being formed as dimensionally stable ring segments (34) and being acted on by a radial spring force in such a way that during the plugging-in operation the retaining elements in each case move radially.

9. Plug-in coupling according to Claim 8, **characterized in that** the holding cage (38) of the retaining element (12) is connected to the second pressure ring (48) of the rotary bearing (40) in particular via a snap-action force and form-fitting connection (54) such that the retaining elements (34) come to bear axially directly on the second pressure ring (48).

10. Plug-in coupling according to one of Claims 1 to 9, **characterized by** at least one additional radial bearing (70) for supporting the plugged-in plug part (4) against transverse forces and against tilting.

11. Plug-in coupling according to one of Claims 1 to 10, **characterized by** an axially displaceable release sleeve (62) for spreading the retaining element (12) for the purpose of releasing the plug part (4).

## Revendications

1. Raccord à emboîtement pour tuyauteries de fluides sous pression, comprenant deux parties d'accouplement (2, 4), à savoir une partie boîtier (2) et une partie à emboîter (4) qui peut être enfoncée dans la direction d'un axe d'accouplement (22) dans une ouverture de réception (8) de la partie boîtier (2), la partie à emboîter (4) enfoncée pouvant être bloquée à l'intérieur de l'ouverture de réception (8) automatiquement pour empêcher la séparation par l'intermédiaire d'un élément de retenue (12) mobile de manière élastique dans le sens radial, l'élément de retenue (12) logé du côté d'une partie d'accouplement (2) s'engageant en bloquant, de manière solidaire avec correspondance de forme, derrière un cran de blocage radial (14) de l'autre partie d'accouplement (4), **caractérisé par** un palier de pivotement (40) disposé entre l'élément de retenue (12) et l'une des deux parties d'accouplement (2, 4), de façon que la partie à emboîter (4) enfoncée et bloquée par l'intermédiaire de l'élément de retenue (12) pour empêcher la séparation puisse tourner autour de l'axe d'accouplement (22) relativement à la partie boîtier (2) par l'intermédiaire du palier de pivotement (40), même lorsqu'une force (F) s'exerce dans le sens de la séparation (24), le palier de pivotement (40) comprenant, en tant que palier à roulement axial, une première bague de compression (46) et une deuxième bague de compression (48), ainsi que des corps de roulement (50) disposés dans le sens axial entre les bagues de compression (46, 48), et la première bague de compression (46) du palier de pivotement (40) située à distance de l'élément de retenue (12) étant reliée de manière résistante à la rotation ou d'une seule pièce avec la partie boîtier (2), tandis que la deuxième bague de compression (48) du palier de pivotement (40), tournée vers l'élément de retenue (12), est reliée avec la partie boîtier (2) de façon à pouvoir tourner relativement à la partie boîtier (2), d'une part, mais à être fixée dans le sens axial, d'autre part.

2. Raccord à emboîtement selon la revendication 1, **caractérisé en ce que** l'élément de retenue (12) est logé dans un élargissement (30) à l'intérieur de la partie boîtier (2) et **en ce que** le cran de blocage radial (14) est formé sur la partie à emboîter (4), le palier de pivotement (40) étant disposé dans le sens axial entre l'élément de retenue (12) et la partie boîtier (2).

3. Raccord à emboîtement selon la revendication 1 ou 2, **caractérisé en ce que** le palier de pivotement (40) est formé comme un roulement à billes axial avec des billes disposées dans le sens axial entre les bagues de compression (46, 48).

4. Raccord à emboîtement selon l'une des revendications 1 à 3, **caractérisé en ce que** le palier de pivotement (40) est disposé à l'intérieur de la partie boîtier (2), dans un élargissement radial (42) de l'ouverture de réception (8), du côté de l'élément de retenue (12) tourné vers le côté embouchure de l'ouverture de réception (8), dans le sens axial entre l'élément de retenue et une surface étagée radiale de la partie boîtier (2).

5. Raccord à emboîtement selon la revendication 4, **caractérisé en ce que** la partie boîtier (2) comprend deux parties, une partie de base (26) et une partie d'insertion (28), l'élargissement (30) logeant l'élément de retenue (12) et l'élargissement (42) logeant le palier de pivotement étant formés dans la zone entre la partie de base (26) et la partie d'insertion insérée (28).

6. Raccord à emboîtement selon la revendication 5, **caractérisé en ce que** la première bague de compression (46) est reliée de manière résistante à la rotation ou d'une seule pièce avec la partie d'insertion (28).

7. Raccord à emboîtement selon la revendication 5 ou 6, **caractérisé en ce que** la deuxième bague de compression (46) peut tourner relativement avec la partie d'insertion (28) mais est reliée de manière fixe dans la direction axiale.

8. Raccord à emboîtement selon l'une des revendications 1 à 7, **caractérisé en ce que** l'élément de retenue (12) comprend une cage de réception de forme annulaire (38) et des corps de retenue logés dedans, lesdits corps de retenue étant formés de préférence comme des segments d'anneau indéformables (34) et soumis à une force élastique radiale, de façon qu'ils se déplacent dans le sens radial lors de l'emboîtement.

9. Raccord à emboîtement selon la revendication 8, **caractérisé en ce que** la cage de réception (38) de l'élément de retenue (12) est reliée avec la deuxième bague de compression (48) du palier de pivotement (40), en particulier par l'intermédiaire d'une liaison (54) encliquetable solidaire avec correspondance de forme et par une liaison dynamique, de façon que les corps de retenue (34) viennent en contact dans le sens axial directement sur la deuxième bague de compression (48).

10. Raccord à emboîtement selon l'une des revendications 1 à 9, **caractérisé par** un palier radial supplémentaire (70) pour supporter la partie à emboîter enfoncée (4) contre des forces transversales, respectivement contre un basculement.

11. Raccord à emboîtement selon l'une des revendications 1 à 10, **caractérisé par** une douille de séparation (62) mobile dans le sens axial pour l'écartement de l'élément de retenue (12) en vue de libérer la partie à emboîter (4).
